# EUROPEAN PATENT APPLICATION

(11) **EP 3 726 328 A1**
(43) Date of publication of application: **21.10.2020**
(21) Application number: 18889483.6
(22) Date of filing: 31.08.2018
(51) Int. Cl.: G05D 1/02, B25J 13/00

(54) **INFORMATION PROCESSING DEVICE AND INFORMATION PROCESSING METHOD**

(30) Priority: 12.12.2017 JP 2017237428
(71) Applicant: Sony Corporation, 108-0075 Tokyo (JP)
(72) Inventor: FUKUI, Akira, Tokyo 108-0075 (JP)
(74) Representative: MFG Patentanwälte Meyer-Wildhagen Meggle-Freund Gerhard PartG mbB
(86) International application number: PCT/JP2018/032297
(87) International publication number: WO 2019/116643

(57) **Abstract**

To make the surroundings recognize an internal state and a behavior plan of an autonomous operation body.

Provided is an information processing apparatus including an output control unit that controls presentation of internal information that affects behavior of an autonomous operation body, in which the output control unit controls dynamic presentation of the internal information and behavior plan information related to a behavior plan of the autonomous operation body based on the internal information, and the behavior plan information includes information indicating a flow of behavior of the autonomous operation body in time series. Furthermore, provided is an information processing method including, by a processor, controlling presentation of internal information that affects behavior of an autonomous operation body, in which the controlling presentation further includes controlling dynamic presentation of the internal information and behavior plan information related to a behavior plan of the autonomous operation body based on the internal information, and the behavior plan information includes information indicating a flow of behavior of the autonomous operation body in time series.

## Description

### TECHNICAL FIELD

The present disclosure relates to an information processing apparatus and an information processing method.

### BACKGROUND ART

In recent years, various apparatuses that perform an autonomous operation using a machine learning technology or the like have been developed. The apparatus as described above can perform an autonomous operation according to the situation on the basis of a recognized situation, for example. For example, Patent Document 1 discloses a human guidance robot that guides a person to a set point.

### CITATION LIST

### PATENT DOCUMENT

Patent Document 1: Japanese Patent Application Laid-Open No. 2013-107184

### SUMMARY OF THE INVENTION

### PROBLEMS TO BE SOLVED BY THE INVENTION

By the way, the behavior of the device that performs an autonomous operation can be dynamically changed by various factors such as a recognized situation. However, the human guidance robot disclosed in Patent Document 1 does not have means that presents information related to the factors and changing behavior as described above. For this reason, it is difficult for a person or the like guided by the human guidance robot to grasp the internal state and future behavior of the human guidance robot.

Therefore, the present disclosure proposes new and improved information processing apparatus and information processing method that enable the surroundings to recognize the internal state and the behavior plan of the autonomous operation body.

### SOLUTIONS TO PROBLEMS

According to the present disclosure, provided is an information processing apparatus including an output control unit that controls presentation of internal information that affects behavior of an autonomous operation body, in which the output control unit controls dynamic presentation of the internal information and behavior plan information related to a behavior plan of the autonomous operation body based on the internal information, and the behavior plan information includes information indicating a flow of behavior of the autonomous operation body in time series.

Furthermore, according to the present disclosure, provided is an information processing method including, by a processor, controlling presentation of internal information that affects behavior of an autonomous operation body, in which the controlling presentation further includes controlling dynamic presentation of the internal information and behavior plan information related to a behavior plan of the autonomous operation body based on the internal information, and the behavior plan information includes information indicating a flow of behavior of the autonomous operation body in time series.

### EFFECTS OF THE INVENTION

As described above, according to the present disclosure, it is possible to make the surroundings recognize an internal state and a behavior plan of an autonomous operation body.

Note that the effect described above is not necessarily limitative, and any of the effects shown in the present specification or other effects that can be understood from the present specification may be exhibited together with the effect described above, or instead of the effect described above.

### BRIEF DESCRIPTION OF DRAWINGS

Fig. 1 is a diagram explaining an overview according to an embodiment of the present disclosure.
Fig. 2 is a block diagram showing a configuration example of an information processing system according to the embodiment.
Fig. 3 is a block diagram showing a functional configuration example of an autonomous operation body according to the embodiment.
Fig. 4 is a block diagram showing a functional configuration example of an information processing server according to the embodiment.
Fig. 5 is a diagram showing a specific example of presentation control of internal information and behavior plan information according to the embodiment.
Fig. 6 is a diagram showing a specific example of presentation control of internal information and behavior plan information according to the embodiment.
Fig. 7 is a diagram showing a specific example of presentation control of internal information and behavior plan information according to the embodiment.
Fig. 8 is a diagram showing a specific example of presentation control of internal information and behavior plan information according to the embodiment.
Fig. 9 is a diagram showing a specific example of presentation control of internal information and behavior plan information according to the embodiment.
Fig. 10 is a diagram showing an example of presentation control in cooperative behavior according to the embodiment.
Fig. 11 is a diagram showing an example of presentation control in cooperative behavior according to the embodiment.
Fig. 12 is a diagram showing an example of presentation control in cooperative behavior according to the embodiment.
Fig. 13 is a diagram showing an example of presentation control in cooperative behavior according to the embodiment.
Fig. 14 is a diagram showing an example of presentation control in cooperative behavior according to the embodiment.
Fig. 15 is a diagram showing an example of presentation control in cooperative behavior according to the embodiment.
Fig. 16 is a diagram showing an example of presentation control in cooperative behavior according to the embodiment.
Fig. 17 is a diagram showing an example of presentation control in cooperative behavior according to the embodiment.
Fig. 18 is a diagram for describing information presentation indicating a time-series behavior order related to cooperative behavior according to the embodiment.
Fig. 19 is a flowchart showing a flow of control by an information processing server according to the embodiment.
Fig. 20 is a diagram showing a hardware configuration example according to an embodiment of the present disclosure.

### MODE FOR CARRYING OUT THE INVENTION

Preferred embodiments of the present disclosure will be described in detail below with reference to the accompanying drawings. Note that, in the present specification and the drawings, the same reference numerals are given to the constituent elements having substantially the same functional configuration, and redundant explanations are omitted.

Note that the description will be given in the following order.
1. Embodiment
   1.1. Overview
   1.2. System configuration example
   1.3. Functional configuration example of autonomous operation body 10
   1.4. Functional configuration example of information processing server 20
   1.5. Specific examples of presentation control
   1.6. Flow of control
2. Hardware configuration example
3. Conclusion

### <1. Embodiment>

### << 1.1. Overview >>

As described above, in recent years, various devices that perform autonomous operations have been developed and put into practical use. The device as described above can execute various tasks without an operation by an operator, for example, by autonomously performing behavior determined to be optimal for a recognized situation.

However, it is often assumed that the device as described above does not share the same space at the same time with a human. For example, a cleaning robot of an autonomous operation type performs cleaning when there is no human. Furthermore, a surveillance robot of an autonomous operation type performs surveillance operation in a space where the number of humans who are performing activity is extremely limited, such as hospitals at night, and when a human is detected, such a robot stops the operation to ensure safety in some cases.

On the other hand, with the development of technology, it is assumed that various autonomous operation bodies will execute tasks in an environment where ordinary people are present and will perform cooperative behavior by sharing a purpose with humans in the future. Examples include a transport robot that travels at an airport, a hospital, or the like so as not to disturb the behavior of general users, and a nursing care robot that assists an elderly person while interacting with the elderly person at home or the like.

Here, the autonomous operation body such as the transport robot described above may be, for example, a semi-automatic control device. For example, in a relatively simple environment, a transport robot may perform autonomous traveling without requiring direct operation by an operator, and perform an operation based on the operation or instruction of an observer or passenger only on complicated terrain such as narrow road width. Even in this case, the number of operators and the work load can be significantly reduced as compared with a completely-operation type robot.

However, at this time, in a case where the general user, the elderly person, the observer observing the autonomous operation body, or the like described above cannot predict the internal state or the next behavior of the autonomous operation body, each behavior of the autonomous operation body can be a factor that causes the anxiety of each person and a factor that reduces convenience.

The technical concept according to the present disclosure has been conceived in consideration of the point described above, and enables the surroundings to recognize the internal state and the behavior plan of the autonomous operation body. For this purpose, an information processing apparatus that implements an information processing method according to an embodiment of the present disclosure includes an output control unit that controls presentation of internal information that affects behavior of an autonomous operation body, and the output control unit controls dynamic presentation of the internal information described above and behavior plan information related to a behavior plan of the autonomous operation body based on the internal information. Furthermore, the behavior plan information described above includes information indicating a flow of behavior of the autonomous operation body in time series.

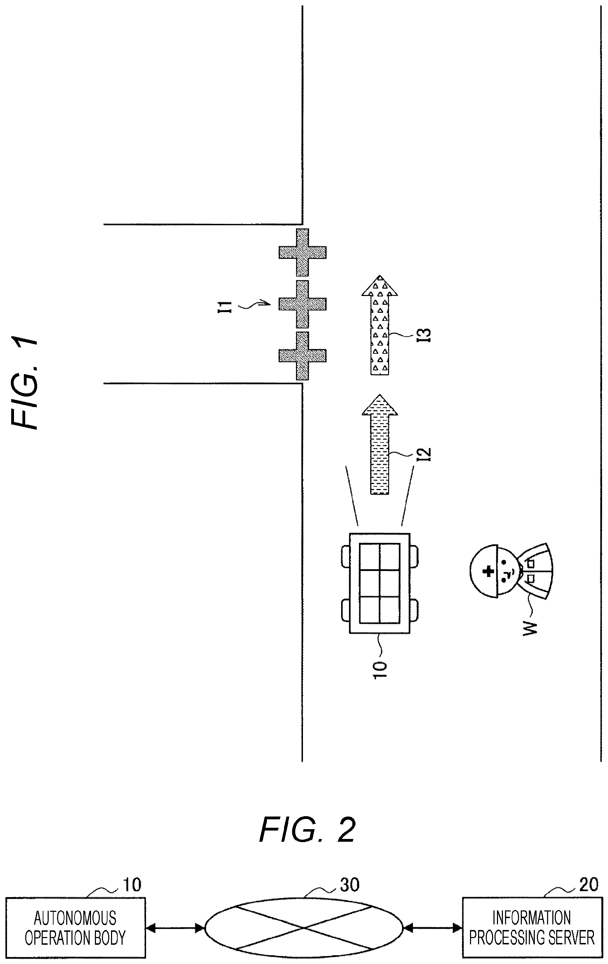

Fig. 1 is a diagram explaining an overview according to an embodiment of the present disclosure. Fig. 1 shows an autonomous operation body 10 that is a transport robot that autonomously travels in an airport where a general user is present, and an observer W who observes the autonomous operation body 10.

Here, the observer W is a person who can perform control such as an emergency stop of the autonomous operation body 10, and the observer W has a role of, in a case where the observer W determines that the behavior of the autonomous operation body 10 is strange, performing emergency stop of the autonomous operation body 10 to ensure the safety of the surroundings and the autonomous operation body 10. Note that the observer W may perform remote observation and remote control of the autonomous operation body 10 from a remote location, for example, instead of around the autonomous operation body 10.

Furthermore, the autonomous operation body 10 shown in Fig. 1 is a transport robot that performs various moving operations such as starting, accelerating, decelerating, stopping, and changing directions on the basis of a recognized situation. However, here, it is assumed that, in a case where the autonomous operation body 10 does not have means for presenting information related to the internal state and the behavior plan to the observer W, even in a case where the operation performed by the autonomous operation body 10 is reasonable, the operation may become an anxious factor for the observer W.

For example, in a case where the autonomous operation body 10 detects a blind spot at an intersection in the approach direction, assumes a case where a pedestrian or the like runs out of the blind spot, and decelerates or stops, the behavior can be said as behavior based on a reasonable behavior plan of the autonomous operation body 10.

However, in particular, for the observer W who does not recognize the blind spot described above, a case is also assumed where the deceleration or stop described above is felt to be an irrational operation. In this case, the observer W may erroneously recognize the operation as a malfunction, perform emergency stop of the autonomous operation body 10 that is operating normally, and perform unnecessary maintenance.

In order to avoid the situation as described above, an information processing server 20 that controls the autonomous operation body 10 according to an embodiment of the present disclosure has a function of causing the autonomous operation body 10 to dynamically present internal information related to autonomous behavior of the autonomous operation body 10, and behavior plan information based on the internal information.

Here, the behavior plan information described above may include at least information indicating a flow of behavior of the autonomous operation body 10 in time series. Furthermore, the internal information described above includes various types of recognition information related to the surrounding environment of the autonomous operation body 10.

In the case of the example shown in Fig. 1, the information processing server 20 causes the autonomous operation body 10 to output recognition information related to the detected blind spot as visual information I1, and output behavior plan information related to deceleration as visual information 12. Moreover, in a case where the blind spot disappears due to the movement of the autonomous operation body 10, the information processing server 20 causes the autonomous operation body 10 to display behavior plan information indicating that acceleration is performed, as visual information 13.

Note that the information processing server 20 according to the present embodiment may, for example, present the visual information I1 to I3 shown in Fig. 1 to surrounding people by projection. According to such display control, it is possible to efficiently present information to many people without depending on the orientation of a display device. Furthermore, the information processing server 20 can present the visual information I1 to I3 only to a target person such as the observer W wearing a wearable device using an augmented reality (AR) technology or a virtual reality (VR) technology.

As described above, according to the information processing server 20 according to the present embodiment, instead of simply displaying the recognition result, the internal information that causes the behavior change of the autonomous operation body 10 acquired by learning, and the behavior plan that changes on the basis of the internal information can be presented to the observer W or the like present in the surroundings.

According to the functions described above of the information processing server 20 and the autonomous operation body 10 according to the present embodiment, it is possible for the observer W or the like present in the surroundings to clearly grasp the internal state and the behavior plan of the autonomous operation body 10. According to this, it is possible to eliminate the anxiety of the surrounding people about the behavior of the autonomous operation body 10, and effectively prevent erroneous recognition related to malfunction or the like. Furthermore, in a case where information related to the object to be recognized by the autonomous operation body 10 is not presented, the observer W can quickly and accurately perform emergency stop or the like of the autonomous operation body 10, and can ensure the safety of the autonomous operation body 10 and the surroundings.

Hereinafter, functions of the information processing server 20 according to an embodiment of the present disclosure and effects by the functions will be described in detail with reference to specific examples.

### « 1.2. System configuration example »

First, a configuration example of an information processing system according to an embodiment of the present disclosure will be described. Fig. 2 is a block diagram showing a configuration example of an information processing system according to the present embodiment. Referring to Fig. 2, the information processing system according to the present embodiment includes the autonomous operation body 10 and the information processing server 20. Furthermore, the autonomous operation body 10 and the information processing server 20 are connected via a network 30 so that they can communicate with each other.

### (Autonomous operation body 10)

The autonomous operation body 10 according to the present embodiment is an information processing apparatus that performs an autonomous operation on the basis of control by the information processing server 20. As described above, the autonomous operation body 10 according to the present embodiment has a function of presenting internal information and behavior plan information related to the autonomous operation to a person present in the surrounding.

As shown in Fig. 1, the autonomous operation body 10 according to the present embodiment may be, for example, a transport robot that transports articles at an airport, hospital, hotel, shopping mall, factory, warehouse, or the like. On the other hand, the autonomous operation body 10 according to the present embodiment is not limited to such an example, and may be various devices that perform an autonomous operation.

The autonomous operation body 10 according to the present embodiment may be, for example, a manipulator or various types of robot arms that execute a task in a factory or a warehouse. Furthermore, the autonomous operation body 10 according to the present embodiment may be, for example, an unmanned aerial vehicle (UAV) such as a drone, a medical robot, or the like. According to the information processing method according to the present embodiment, the internal state and the behavior plan related to the autonomous operation can be clearly grasped by the observer, the ordinary people in the surrounding, the worker performing the cooperative behavior, and the like. For this reason, the information processing method according to the present embodiment is similarly effective for various devices that perform an autonomous operation.

### (Information processing server 20)

The information processing server 20 according to the present embodiment is an information processing apparatus that controls the operation of the autonomous operation body 10. Furthermore, one feature of the information processing server 20 according to the present embodiment is causing the autonomous operation body 10 to dynamically present internal information that affects behavior of the autonomous operation body 10, and behavior plan information based on the internal information. Details of the functions of the information processing server 20 according to the present embodiment will be separately described later.

### (Network 30)

The network 30 has a function of connecting the autonomous operation body 10 and the information processing server 20, and the autonomous operation bodies 10 to each other. The network 30 may include a public network such as the Internet, a telephone network, or a satellite communication network, various local area network (LAN) including Ethernet (registered trademark), a wide area network (WAN), or the like. Furthermore, the network 30 may include a dedicated network such as an Internet protocol-virtual private network (IP-VPN). Furthermore, the network 30 may include a wireless communication network such as Wi-Fi (registered trademark) or Bluetooth (registered trademark).

The configuration example of the information processing system according to an embodiment of the present disclosure has been described above. Note that the configuration described above with reference to Fig. 2 is merely an example, and the configuration of the information processing system according to the present embodiment is not limited to the example. For example, the functions of the autonomous operation body 10 and the information processing server 20 according to the present embodiment may be achieved by a single device. The configuration of the information processing system according to the present embodiment can be flexibly modified according to specifications and operations.

### << 1.3. Functional configuration example of autonomous operation body 10 >>

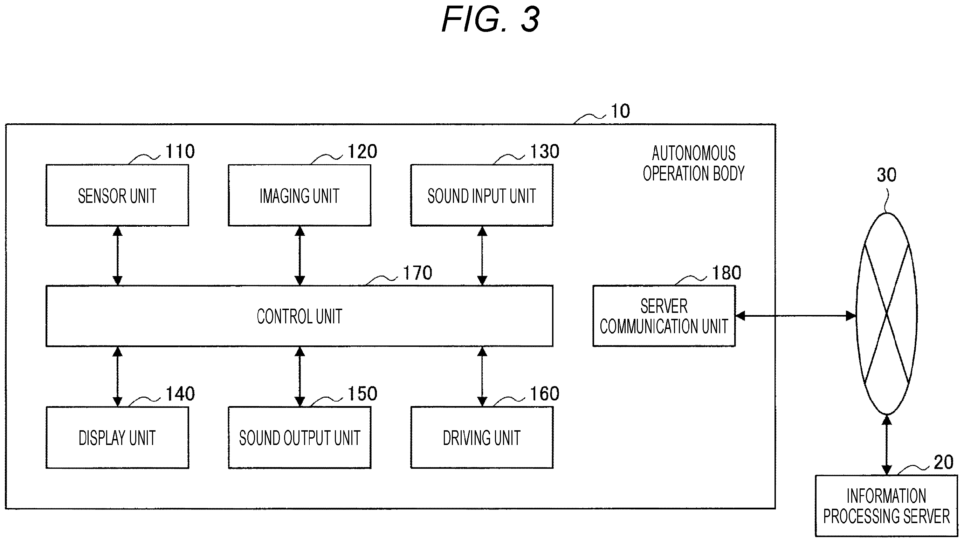

Next, a functional configuration example of the autonomous operation body 10 according to an embodiment of the present disclosure will be described. Fig. 3 is a block diagram showing a functional configuration example of the autonomous operation body 10 according to the present embodiment. Referring to Fig. 3, the autonomous operation body 10 according to the present embodiment includes a sensor unit 110, an imaging unit 120, a sound input unit 130, a display unit 140, a sound output unit 150, a driving unit 160, a control unit 170, and a server communication unit 180.

### (Sensor unit 110)

The sensor unit 110 according to the present embodiment collects various types of sensor information related to the surrounding environment and the autonomous operation body 10. The sensor information collected by the sensor unit 110 is used for various types of recognition processes by the information processing server 20. For this purpose, the sensor unit 110 includes various sensor devices such as an inertial sensor, a geomagnetic sensor, a radar, a LIDAR, an optical sensor, a heat sensor, a vibration sensor, or a global navigation satellite system (GNSS) signal receiving device, for example.

### (Imaging unit 120)

The imaging unit 120 according to the present embodiment captures an image of a surrounding environment including a moving body such as a pedestrian in the surroundings. The image captured by the imaging unit 120 is used for an object recognition process or the like by the information processing server 20. For this purpose, the imaging unit 120 includes an imaging device capable of capturing an image. Note that the image described above includes a moving image in addition to a still image.

### (Sound input unit 130)

The sound input unit 130 according to the present embodiment has a function of collecting sound information such as an utterance by an observer or a pedestrian in the surroundings and environmental sounds generated in the surroundings. The sound information collected by the sound input unit 130 is used for sound recognition, recognition of the surrounding environment, and the like by the information processing server 20. For this purpose, the sound input unit 130 according to the present embodiment includes a microphone for collecting sound information.

### (Display unit 140)

The display unit 140 according to the present embodiment has a function of displaying visual information. The display unit 140 according to the present embodiment displays, for example, internal information and behavior plan information related to the autonomous operation of the autonomous operation body 10 on the basis of control by the information processing server 20. The display unit 140 according to the present embodiment may perform display on a display, projection display, AR display, VR display, or the like of the internal information and behavior plan information described above. For this purpose, the display unit 140 according to the present embodiment includes various display devices corresponding to the display means employed.

### (Sound output unit 150)

The sound output unit 150 according to the present embodiment has a function of outputting various types of audio including sound. The sound output unit 150 according to the present embodiment may output sound corresponding to the internal information or the behavior plan information on the basis of the control of the information processing server 20, for example. For this purpose, the sound output unit 150 according to the present embodiment includes a sound output device such as a speaker or an amplifier.

### (Driving unit 160)

The driving unit 160 according to the present embodiment achieves various operations of the autonomous operation body 10 on the basis of the control by the information processing server 20. For this purpose, the driving unit 160 according to the present embodiment includes various configurations for achieving the operation of the autonomous operation body 10. The driving unit 160 includes, for example, wheels, a motor, an engine, an actuator, or the like for achieving the movement of the autonomous operation body 10.

### (Control unit 170)

The control unit 170 according to the present embodiment has a function of controlling each configuration included in the autonomous operation body 10. The control unit 170 controls, for example, starting and stopping of each configuration. Furthermore, the control unit 170 inputs a control signal generated by the information processing server 20 to the display unit 140, the sound output unit 150, and the driving unit 160. Furthermore, the control unit 170 according to the present embodiment may have a function equivalent to that of the output control unit 240 of the information processing server 20 as described later.

### (Server communication unit 180)

The server communication unit 180 according to the present embodiment performs information communication with the information processing server 20 via the network 30. Specifically, the server communication unit 180 transmits sensor information, image, and sound information to the information processing server 20, and receives various control signals related to the autonomous operation of the autonomous operation body 10 from the information processing server 20.

The functional configuration example of the autonomous operation body 10 according to the present embodiment has been described above. Note that the configuration described above with reference to Fig. 3 is merely an example, and the functional configuration of the autonomous operation body 10 according to the present embodiment is not limited to this example. For example, the autonomous operation body 10 may further include a configuration for allowing the user to perceive vibration, physical stimulation, electrical stimulation, temperature change, and the like. The internal information and the behavior plan information according to the present embodiment can be presented to the user by the skin sensation information as described above, the operation of the driving unit 160, and the like. Furthermore, as described above, the control unit 170 according to the present embodiment may have a function equivalent to that of the output control unit 240 of the information processing server 20. The functional configuration of the autonomous operation body 10 according to the present embodiment can be flexibly modified according to specifications and operations.

### << 1.4. Functional configuration example of information processing server 20 >>

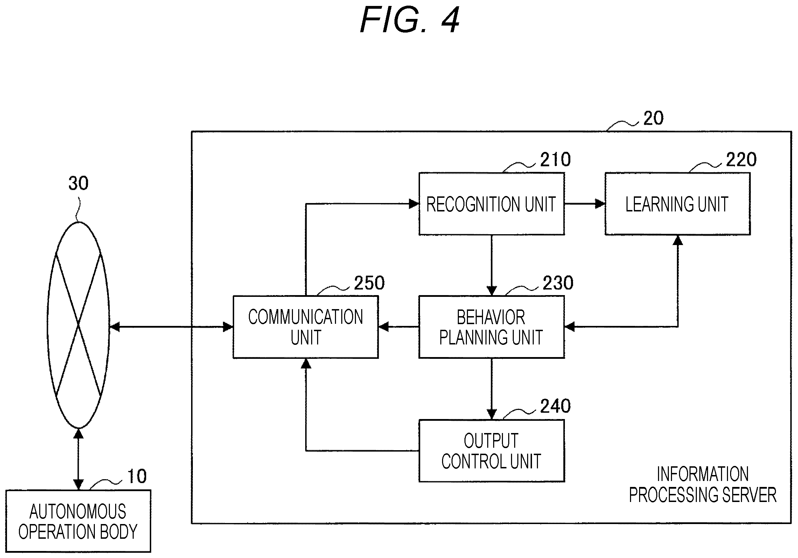

Next, a functional configuration example of the information processing server 20 according to an embodiment of the present disclosure will be described. Fig. 4 is a block diagram showing a functional configuration example of the information processing server 20 according to the present embodiment. Referring to Fig. 4, the information processing server 20 according to the present embodiment includes a recognition unit 210, a learning unit 220, a behavior planning unit 230, an output control unit 240, and a communication unit 250.

### (Recognition unit 210)

The recognition unit 210 according to the present embodiment performs various recognition processes based on the sensor information, the image, and the sound information collected by the autonomous operation body 10. The recognition unit 210 performs, for example, object recognition, terrain recognition, distance recognition, behavior recognition, sound recognition, or the like, and comprehensively estimates the situation of the autonomous operation body 10.

### (Learning unit 220)

The learning unit 220 according to the present embodiment performs learning by associating the situation recognized by the recognition unit 210 with an operation to be performed by the autonomous operation body 10 in the situation. The learning unit 220 according to the present embodiment may perform the learning described above using a machine learning algorithm such as deep learning, for example.

The learning unit 220 according to the present embodiment may perform, for example, reinforcement learning using a reward for avoiding collision on the basis of attention to the recognized object or terrain. In this case, since attention gathers on an object or terrain that is likely to collide, the output control unit 240 can cause the autonomous operation body 10 to present a region that gathers attention as one piece of internal information. Furthermore, the output control unit 240 may cause the autonomous operation body 10 to present internal information related to recognition of an obstacle by defining and cutting out the obstacle on the basis of a rule from a cost map of each particular surrounding environment acquired by the learning unit 220 at the time of learning.

### (Behavior planning unit 230)

The behavior planning unit 230 according to the present embodiment performs behavior planning related to the operation of the autonomous operation body 10 on the basis of the situation recognized by the recognition unit 210 and the learning knowledge by the learning unit 220. The behavior planning unit 230 can plan an operation such as to avoid an object that is a dynamic obstacle having a large motion prediction error, such as a child, for example.

### (Output control unit 240)

The output control unit 240 according to the present embodiment controls the display unit 140, the sound output unit 150, and the driving unit 160 of the autonomous operation body 10 on the basis of the behavior plan determined by the behavior planning unit 230. Furthermore, one of the features of the output control unit 240 according to the present embodiment is controlling of the presentation of internal information that affects the behavior of the autonomous operation body 10. More specifically, the output control unit 240 according to the present embodiment can cause the autonomous operation body 10 to dynamically present the internal information described above and the behavior plan information of the autonomous operation body 10 based on the internal information. As described above, the behavior plan information described above may include information indicating a flow of behavior of the autonomous operation body 10 in time series.

Furthermore, the output control unit 240 according to the present embodiment may cause the autonomous operation body 10 to dynamically present the flow of the behavior of the autonomous operation body 10 that changes on the basis of the internal information. For example, the internal information according to the present embodiment includes recognition information related to the surrounding environment. At this time, the output control unit 240 according to the present embodiment can cause the autonomous operation body 10 to explicitly present the flow of the behavior that has been changed due to the change in the recognized situation. Details of the functions of the output control unit 240 according to the present embodiment will be separately described later.

### (Communication unit 250)

The communication unit 250 according to the present embodiment performs information communication with the autonomous operation body 10 via the network 30. Specifically, the communication unit 250 receives the sensor information, the image, and the sound information from the autonomous operation body 10 and transmits various control signals generated by the output control unit 240 to the autonomous operation body 10.

The functional configuration example of the information processing server 20 according to an embodiment of the present disclosure has been described above. Note that the configuration described above with reference to Fig. 4 is merely an example, and the functional configuration of the information processing server 20 according to the present embodiment is not limited to the example. For example, each function described above may be implemented by being distributed to a plurality of devices. Furthermore, for example, the function of the information processing server 20 may be implemented as a function of the autonomous operation body 10. The functional configuration of the information processing server 20 according to the present embodiment can be flexibly modified according to specifications and operations.

### « 1.5. Specific examples of presentation control »

Next, the presentation control of the internal information and the behavior plan information by the output control unit 240 according to the present embodiment will be described in detail using specific examples. As described above, the output control unit 240 according to the present embodiment has a function of causing the autonomous operation body 10 to dynamically present internal information that affects behavior of the autonomous operation body 10, and behavior plan information based on the internal information.

Furthermore, the internal information according to the present embodiment includes various types of recognition information related to the surrounding environment and intentions of planned behavior. At this time, for example, in a case where the change of the behavior plan is performed due to the recognition of the change in the situation, the output control unit 240 according to the present embodiment may cause the autonomous operation body 10 to dynamically present the information related to the changed behavior plan.

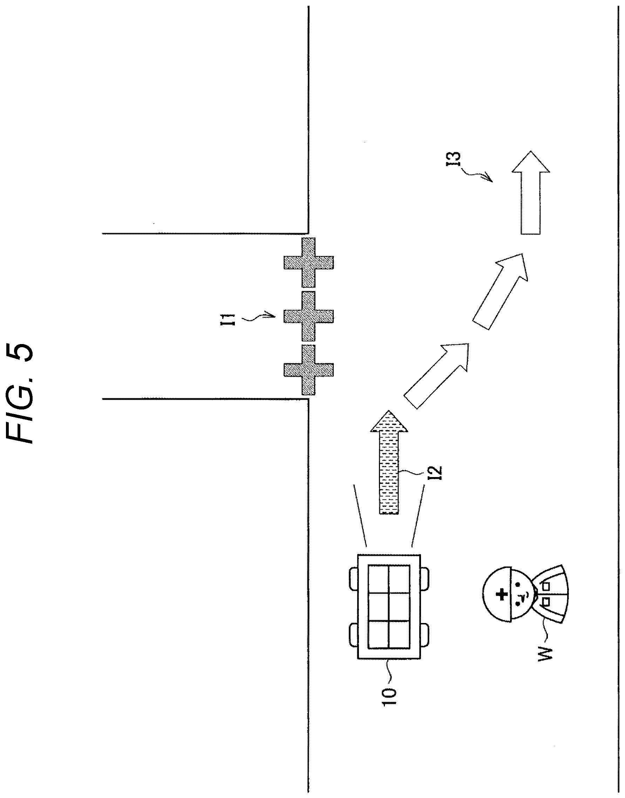

Figs. 5 to 9 are diagrams showing specific examples of presentation control of internal information and behavior plan information according to the embodiment. For example, Fig. 5 shows an example of a case where the output control unit 240 causes the autonomous operation body 10 to present information related to the behavior plan that has been changed on the basis of the recognition of a blind spot. As described above, the recognition information according to the present embodiment includes information related to the surrounding terrain. More specifically, the information related to the surrounding terrain described above may include detection information of terrain that causes a reduction in safety of the autonomous operation body 10, pedestrians, installed objects, or the like.

In the case of the example shown in Fig. 5, the output control unit 240 causes the autonomous operation body 10 to display the recognition information related to the blind spot as the visual information I1, and causes the autonomous operation body 10 to display the behavior plan information that has been changed on the basis of the recognition information as the visual information I2 and 13. Specifically, the output control unit 240 may cause the autonomous operation body 10 to display the visual information I2 indicating that deceleration is performed just before an intersection where the blind spot exists, and the visual information I3 indicating an intention to perform a route change so as to move away from the blind spot in preparation for running out of a pedestrian or the like.

As described above, the internal information according to the present embodiment may include an intention of a planned behavior. At this time, the output control unit 240 may cause the autonomous operation body 10 to output a voice utterance such as "movement route is changed in preparation for pedestrian running out", for example. According to the function described above of the output control unit 240 according to the present embodiment, the intention of the behavior that has been changed on the basis of the internal information can be clearly grasped by the observer W or the like, and higher effects can be obtained for removal of anxiety factors or the like.

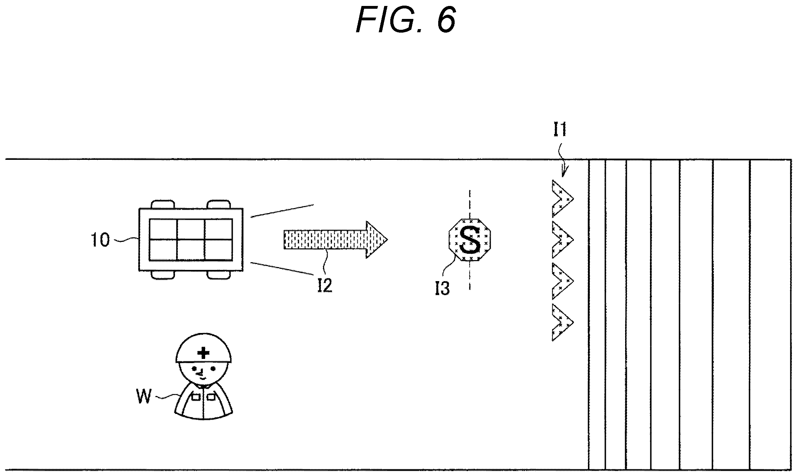

Furthermore, Fig. 6 shows an example of a case where the output control unit 240 causes the autonomous operation body 10 to present information related to the behavior plan that has been changed on the basis of the recognition of a step such as a descending stair. In the case of the example shown in Fig. 6, the output control unit 240 causes the autonomous operation body 10 to display the recognition information related to the step as the visual information I1, and causes the autonomous operation body 10 to display the behavior plan information that has been changed on the basis of the recognition information as the visual information I2 and 13.

Specifically, the output control unit 240 causes the autonomous operation body 10 to display the visual information I2 indicating that deceleration is performed just before the step and the visual information I3 indicating the expected stop position. As described above, the behavior plan information according to the present embodiment includes various types of information related to the transition of the position information of the autonomous operation body 10 in time series. The behavior plan information may include, for example, information related to moving start, stop, moving speed such as deceleration and acceleration, or the like of the autonomous operation body 10.

According to the function described above of the output control unit 240 according to the present embodiment, for example, the behavior plan related to deceleration and stop is shown to the observer W or the like in advance, so that the observer W can clearly grasp that the autonomous operation body 10 is operating normally so that it does not fall from a step, and unnecessary emergency stop of the autonomous operation body 10 or the like can be avoided.

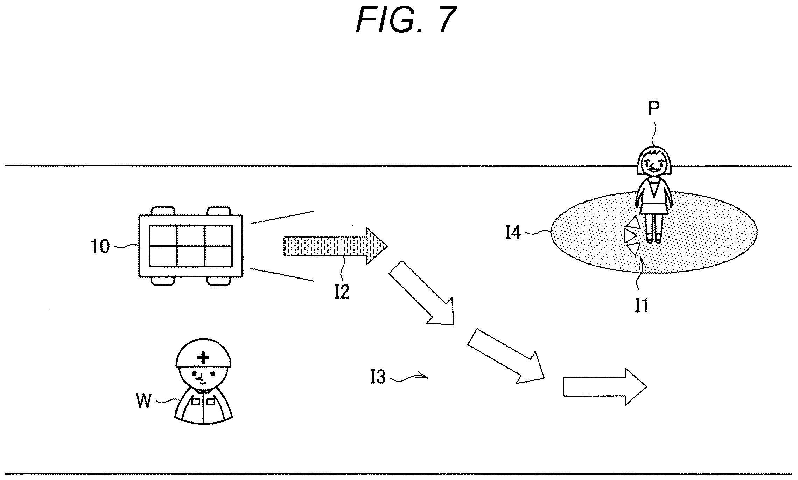

Note that the information related to the surrounding terrain according to the present embodiment is not limited to blind spots and steps as shown in Figs. 6 and 7. For example, the output control unit 240 may cause the autonomous operation body 10 to present that the autonomous operation body 10 recognizes a wall that exists in the straight traveling direction of the autonomous operation body 10 and stops in front of the wall, that the autonomous operation body 10 makes a detour for a puddle, a heat source, or a falling object that causes a puncture, or the like.

Furthermore, Fig. 7 shows an example of a case where the output control unit 240 causes the autonomous operation body 10 to present information related to the behavior plan that has been changed on the basis of the recognition of a moving body such as a pedestrian. As described above, the recognition information according to the present embodiment includes detection information of a moving body such as a pedestrian in the surroundings of the autonomous operation body 10. In the case of the example shown in Fig. 7, the output control unit 240 causes the autonomous operation body 10 to display, as the visual information I1, recognition information indicating that a pedestrian P who is a child is recognized. Furthermore, the output control unit 240 causes the autonomous operation body 10 to display, as the visual information I2 and 13, behavior plan information indicating that the autonomous operation body 10 decelerates in front of the pedestrian P and makes a detour.

Moreover, the output control unit 240 causes the autonomous operation body 10 to display, as the visual information 14, a range in which the pedestrian P may move within a predetermined time. As described above, the recognition information according to the present embodiment includes information related to the prediction of the behavior of a moving body such as a pedestrian.

Furthermore, as described above, for example, in a case of detecting a moving body having a large motion prediction error such as a child, the behavior planning unit 230 plans behavior sufficient for avoiding the moving body on the basis of the property of the moving body, and the output control unit 240 can cause behavior plan information related to the plan to be dynamically output.

According to the function described above of the output control unit 240 according to the present embodiment, for example, the behavior plan related to deceleration or detour is presented to the observer W in advance, so that the observer W can clearly grasp that the autonomous operation body 10 recognizes the pedestrian P such as a child, or that the autonomous operation body 10 is behaving while avoiding the range in which the pedestrian P may move.

Note that the output control unit 240 according to the present embodiment can cause the autonomous operation body 10 to present recognition of a stationary object and a change in a behavior plan based on the recognition, in addition to a moving body as described above. The output control unit 240 may cause the autonomous operation body 10 to present, for example, that the autonomous operation body 10 recognizes an expensive object or an object that may cause damage to the autonomous operation body 10 in the event of a collision, or that the autonomous operation body 10 makes a detour to avoid the object.

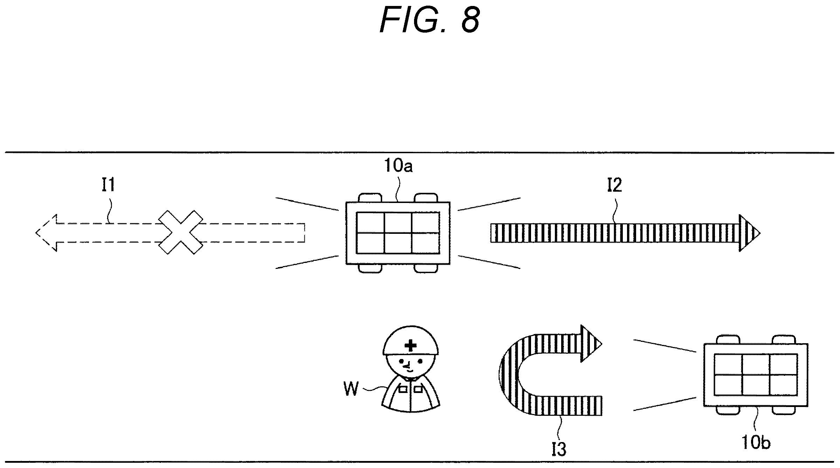

Furthermore, Fig. 8 shows an example of a case where the output control unit 240 causes an autonomous operation body 10a to present information related to the behavior plan that has been changed on the basis of the past behavior. Note that, in a case of the example shown in Fig. 8, it is assumed that the autonomous operation body 10a should originally take a course in the left direction in the drawing. At this time, the output control unit 240 causes the autonomous operation body 10a to display, for example, as the visual information I1, recognition information indicating that the autonomous operation body 10 has actually moved to the left in the past, but a dead end has occurred in the left direction. Furthermore, the output control unit 240 causes the autonomous operation body 10a to present, as the visual information 12, behavior plan information indicating that the course is taken in the right direction for the reason described above.

As described above, the recognition information according to the present embodiment includes matters acquired on the basis of past behavior, and the output control unit 240 can cause the autonomous operation body 10 to present internal information related to the matter. According to the function described above of the output control unit 240 according to the present embodiment, it is possible to prevent the observer W from erroneously recognizing that the autonomous operation body 10 is heading to the wrong destination, and to effectively remove anxiety factors.

Furthermore, in an example shown in Fig. 8, a behavior plan in which another autonomous operation body 10b performs a direction change is made on the basis of the internal information displayed by the autonomous operation body 10a, and the behavior plan information related to the direction change is displayed as the visual information 13. As described above, the internal information and the behavior plan information according to the present embodiment may be used for a behavior plan of another autonomous operation body 10.

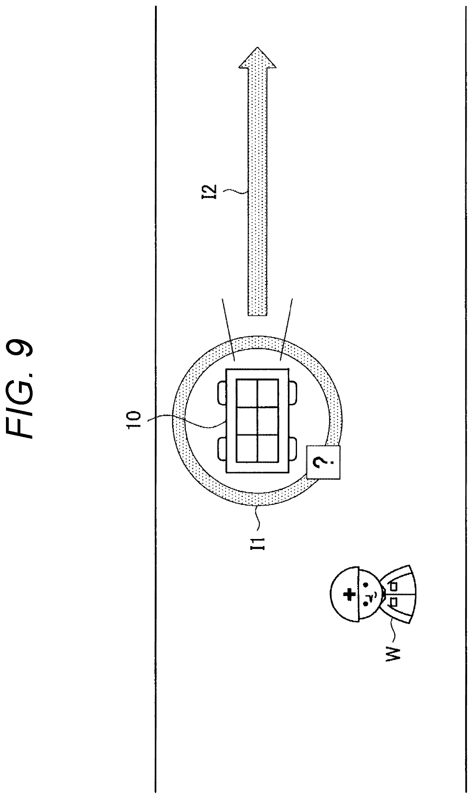

Furthermore, Fig. 9 shows an example of a case where the output control unit 240 causes the autonomous operation body 10 to present internal information indicating that the autonomous operation body 10 has lost position information. As described above, the internal information according to the present embodiment may include information related to the self-position estimation of the autonomous operation body 10.

Specifically, the output control unit 240 causes the autonomous operation body 10 to display the visual information I1 indicating the internal state in which the position information has been lost and the visual information I2 indicating the immediate behavior plan. The visual information I1 related to the loss of the position information may be displayed by, for example, a circular symbol surrounding the periphery of the autonomous operation body 10 and a "?" mark as shown in the drawing. At this time, the output control unit 240 may cause the "?" mark of the visual information I1 to be displayed at a position that is easily visible to the observer W, so that the observer W can easily grasp that the position information has been lost.

As described above, the output control unit 240 according to the present embodiment can control the presentation of the internal information and the behavior plan information on the basis of the state of the presentation target person such as the observer W. For example, the output control unit 240 may perform control such that the information described above is not displayed on the autonomous operation body 10 constantly but is displayed only in a case where there is a presentation target person around. According to such control, the power consumption required for information presentation can be effectively reduced.

Furthermore, for example, the output control unit 240 may cause the autonomous operation body 10 not to present information in a case where the presentation target person is gazing at another object or the like, or in a case where it is assumed that the probability that the presentation target person visually recognizes the displayed information is low such as sleeping. Furthermore, in a case where the observer W or the like is checking a document or the like, the output control unit 240 can also perform control such as causing the autonomous operation body 10 to present information by sound.

Moreover, the output control unit 240 may control the presentation content and the presentation method related to the internal information and the behavior plan information on the basis of the attribute of the presentation target person. For example, in a case where the presentation target person is an elderly person, the output control unit 240 may perform control such as increasing the size of the element to be displayed or increasing the contrast to enhance the visibility. On the other hand, in a case where the presentation target person is a child, the output control unit 240 may cause the autonomous operation body 10 to perform information presentation using a character or the like.

The output control of the internal information and the behavior plan information by the output control unit 240 according to the present embodiment has been described using examples. Note that, in the description described above with reference to Figs. 5 to 9, a case has been described as an example where the output control unit 240 causes the autonomous operation body 10 to present internal information and behavior plan information using symbols such as arrows and signs. However, the control of the presentation information according to the present embodiment is not limited to the example.

The output control unit 240 may control presentation using various types of visual information such as letters, pictures, colors, blinking lights, and animations, in addition to the symbols as shown in the drawings. Furthermore, as described above, the output control unit 240 can cause the autonomous operation body 10 to perform information presentation using various types of audio including sound, and skin sensation such as vibration, stimulation, or temperature change.

Subsequently, the presentation control of the internal information and the behavior plan information related to the cooperative behavior according to the present embodiment will be described. Here, the cooperative behavior described above refers to a case where the autonomous operation body 10 and a person or the autonomous operation bodies 10 cooperate with each other to perform some behavior that requires mutual communication.

An example of the cooperative behavior according to the present embodiment is, for example, passing in a passage. At this time, in a case of humans, it is possible to confirm each other's intention or predict their behavior by eye contact or other nonverbal operations, conversation, or the like, and avoid collision.

On the other hand, when a pedestrian passes an autonomous operation robot or the like, in a case where the robot does not have a means for presenting information related to an internal state or a behavior plan, it is difficult for the pedestrian to predict the robot's course, and it cannot be denied that both may collide with each other.

For this reason, the output control unit 240 according to the present embodiment can cause the autonomous operation body 10 to display the behavior plan information indicating the behavior flow in the cooperative behavior of the autonomous operation body 10 and another moving body to assist the efficient achievement of cooperative behavior of the autonomous operation body 10 and the other moving body. Here, the other moving bodies described above widely include pedestrians, observers, workers, animals, and other autonomous operation bodies.

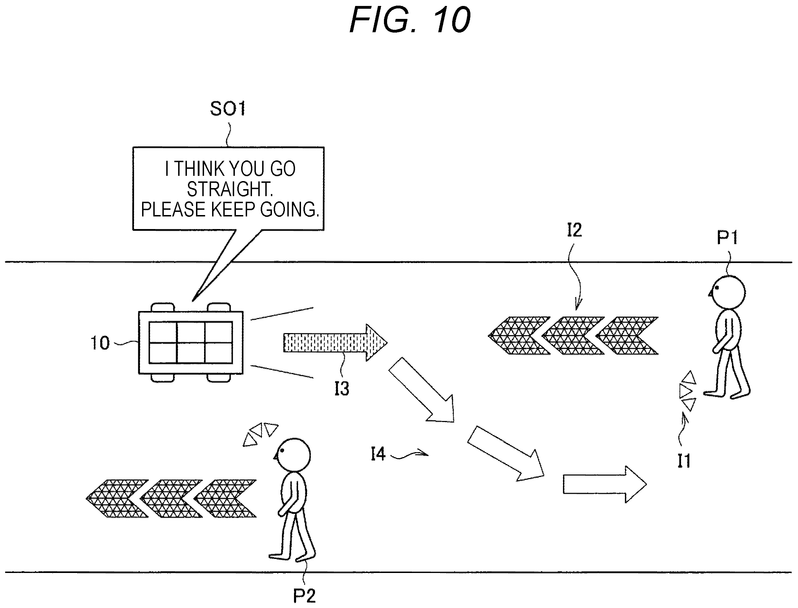

Figs. 10 to 17 are diagrams showing examples of the presentation control in the cooperative behavior according to the present embodiment. For example, Fig. 10 shows an example of a case where the autonomous operation body 10 performs cooperative behavior related to passing the pedestrian P in an indoor passage such as an airport, a hospital, or a station.

In the case of the example shown in Fig. 10, the output control unit 240 causes the autonomous operation body 10 to display as the visual information I1 the internal information indicating that the pedestrians P1 and P2 are recognized, and as the visual information I2 the predicted walking route of the pedestrians P1 and P2.

As described above, the output control unit 240 according to the present embodiment can cause the autonomous operation body 10 to dynamically present the predicted walking route related to the moving body such as a pedestrian as one piece of recognition information. Furthermore, the output control unit 240 may cause the autonomous operation body 10 to present the pedestrian with a moving route of the autonomous operation body 10 that has been changed on the basis of the predicted walking route of the pedestrian along with the walking route. In the case of the example shown in Fig. 10, the output control unit 240 decelerates in front of the pedestrian P1 performing the passing, and causes the autonomous operation body 10 to display the behavior plan information indicating that the autonomous operation body 10 travels while avoiding the pedestrian P1 as the visual information I3 and 14.

As described above, the output control unit 240 according to the present embodiment causes the internal information of the autonomous operation body 10 and the information related to the behavior plan to be presented to a target performing the cooperative behavior with the autonomous operation body 10, so that the target can grasp the next behavior to be performed by the autonomous operation body, and can assist in performing an operation according to the behavior.

Furthermore, as shown in the drawing, at this time, the output control unit 240 may cause notification for the pedestrian P1 of information related to the predicted walking route of the pedestrian P1 by voice utterance SO1. For example, the output control unit 240 may cause the autonomous operation body 10 to display as behavior plan information the optimal path related to collision prevention acquired by the learning unit 220 at the time of learning, and cause the presentation of the result related to learned future prediction to the pedestrian P1 simultaneously to guide the pedestrian P1 to walk as predicted. According to such control, the pedestrian P1 can grasp that the autonomous operation body 10 moves so as to avoid himself/herself, and can walk on the original walking route without fear of collision.

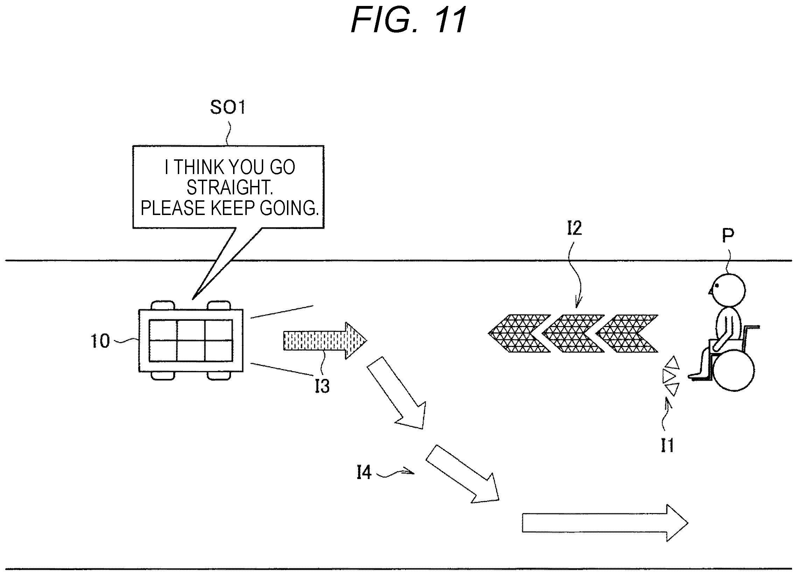

Furthermore, the autonomous operation body 10 according to the present embodiment may perform an operation and information presentation according to an attribute of a target performing cooperative behavior. Fig. 11 shows an example of a case where the autonomous operation body 10 passes a pedestrian P1 in a wheelchair in a passage in a hospital or the like.

At this time, the behavior planning unit 230 according to the present embodiment may make a plan to start the avoidance behavior in further advance than in the case where the autonomous operation body 10 passes a general pedestrian P. Furthermore, the output control unit 240 causes the autonomous operation body 10 to display the recognition information related to the recognition of the pedestrian as the visual information I1 and 12, and display the behavior plan information related to the avoidance behavior described above as the visual information I3 and 14.

As described above, the information processing server 20 according to the present embodiment can control the operation of the autonomous operation body 10 in accordance with the attribute related to the target of the cooperative behavior to further reduce the anxiety of the target. Note that the information processing server 20 according to the present embodiment may cause the autonomous operation body 10 to perform operations according to various attributes such as the emotion, body temperature, affiliation, pregnancy, age, gender, and race, for example, of the target described above.

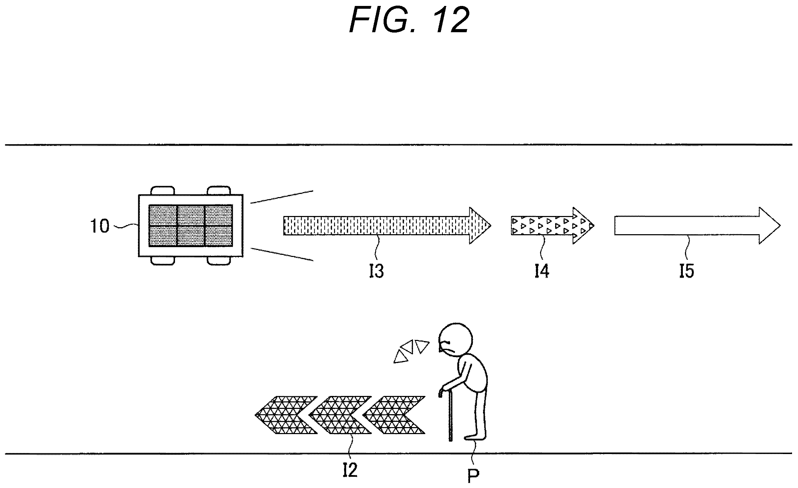

Furthermore, Fig. 12 shows an example of a case where the autonomous operation body 10 performs a deceleration or stop operation when passing an elderly pedestrian P in an indoor passage such as an airport, a hospital, or a station. As shown in the drawing, the passing according to the present embodiment includes a case where the autonomous operation body 10 does not obstruct the walking route of the pedestrian P1.

At this time, the behavior planning unit 230 may plan behavior of deceleration and stop in front of the pedestrian P1, accelerating after passing, and returning to the original moving speed. Furthermore, the output control unit 240 causes the autonomous operation body 10 to display the recognition information related to the recognition of the pedestrian P1 as the visual information I1 and 12, and also display the behavior plan information related to the deceleration, stop, and acceleration described above as the visual information I3 to 15.

According to the control described above by the information processing server 20 according to the present embodiment, even in a case where originally there is no danger of a collision, for example, it is possible to eliminate anxiety of the pedestrian P that the autonomous operation body 10 may suddenly change course, so that more effective cooperative behavior can be implemented.

Note that, at this time, the information processing server 20 may perform the behavior plan and output control described above according to, for example, the attribute of the pedestrian P or the state of the autonomous operation body 10. For example, in a case where the pedestrian P1 is an elderly person, or in a case where the autonomous operation body 10 is mainly loaded with luggage, the information processing server 20 may cause the autonomous operation body 10 to perform the deceleration and stop described above, and information presentation related to the behavior. As described above, the output control unit 240 according to the present embodiment can perform output control related to the autonomous operation body 10 on the basis of various types of recognition information related to the target and the autonomous operation body 10.

Note that, in the examples shown in Figs. 10 to 12, the case has been described where the autonomous operation body 10 operates so as not to disturb the behavior, that is, walking of the pedestrian P performing the cooperative behavior. As described above, the autonomous operation body 10 according to the present embodiment may basically operate so as not to disturb the behavior of surrounding people such as pedestrians. On the other hand, depending on the situation, a case where a pedestrian or the like may make way for the autonomous operation body 10 is also assumed.

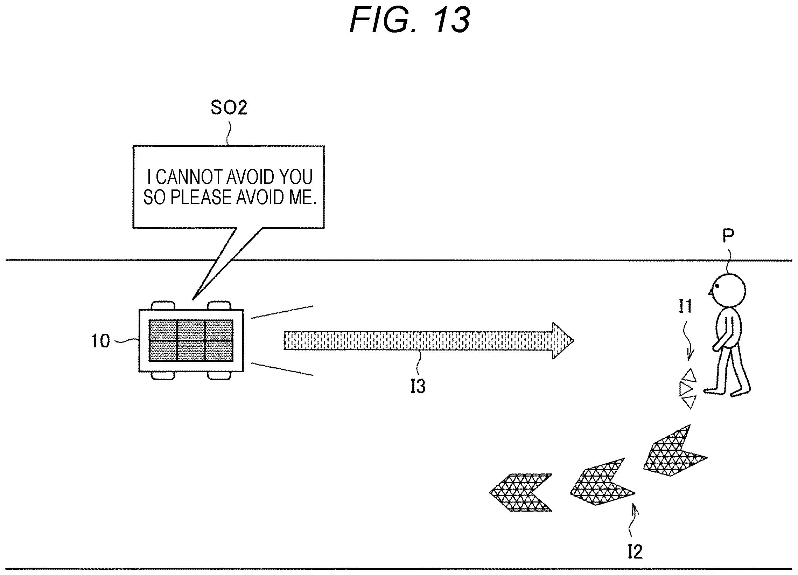

For example, Fig. 13 shows the autonomous operation body 10 facing a pedestrian in an indoor passage. Here, it is assumed that the autonomous operation body 10 shown in Fig. 13 is carrying a heavy luggage. In this case, if the autonomous operation body 10 suddenly decelerates or stops on the basis of the recognition of the pedestrian P, a situation such as a drop of luggage may be assumed. As described above, there is a case where it is appropriate to have the pedestrian P take avoidance behavior for a safer passing.

At this time, for example, the output control unit 240 causes the autonomous operation body 10 to display as the visual information I1 recognition information indicating that the pedestrian P is recognized, and display as the visual information I2 recognition information related to the walking route predicted to be optimal for ensuring safety. Furthermore, the output control unit 240 causes the autonomous operation body 10 to display as the visual information I3 behavior plan information indicating that the autonomous operation body 10 goes straight, and output voice utterance SO2 indicating that avoidance behavior is required.

According to this control, more efficient cooperative behavior according to the situation is implemented, and a walking route for ensuring the safety of the pedestrian P is presented to the pedestrian P to guide the pedestrian P so that cooperative behavior safer for both can be implemented.

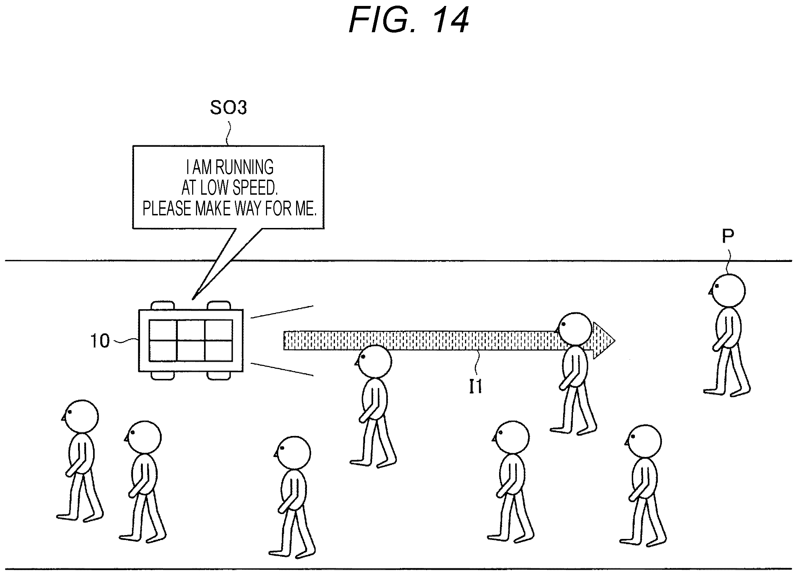

Furthermore, Fig. 14 shows an example of a case where the autonomous operation body 10 operates in a situation where a plurality of pedestrians P exists at an airport, a station, or the like. As described above, in a case where the passage is congested or the like, there is a case where it is difficult to find a movement route of the autonomous operation body 10 that does not disturb the walking of the plurality of pedestrians P. In this case, for example, the output control unit 240 may cause the autonomous operation body 10 to move near the wall at a low speed on the basis of the behavior plan, and display as the visual information I1 the behavior plan information related to the behavior. Furthermore, for example, the output control unit 240 may cause the autonomous operation body 10 to output voice utterance SO3 related to that the autonomous operation body 10 is running at a low speed or that making way for the autonomous operation body 10 is required.

Furthermore, at this time, in a case where there is a plurality of autonomous operation bodies 10 in the passage, by an operation by the plurality of autonomous operation bodies 10 such as gathering and traveling in tandem, disturbing of the walking of the pedestrian P can be minimized.

As described above, the information processing server 20 according to the present embodiment can cause the autonomous operation body 10 to perform more efficient and safer behavior according to various situations, and present information related to the internal state and the behavior plan to the surrounding people.

Note that in Figs. 10 to 14, the case where either the autonomous operation body 10 or the pedestrian performs the avoidance behavior has been described as an example. However, a case is assumed where, in the passing in the passage, it is more efficient that both the autonomous operation body 10 and the pedestrian P perform the avoidance behavior.

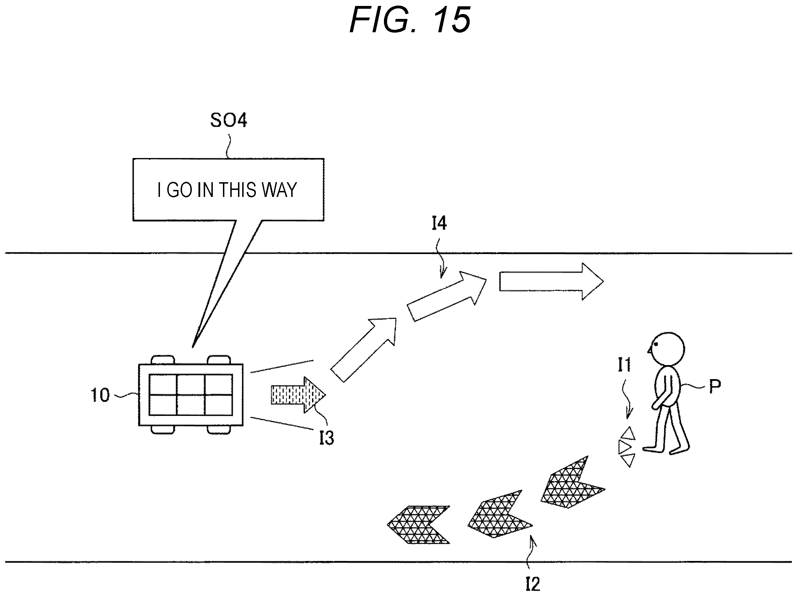

Fig. 15 shows the autonomous operation body 10 in a state in which the pedestrian P opposes the road. At this time, the output control unit 240 causes the autonomous operation body 10 to display as the visual information I1 recognition information indicating that the pedestrian P is recognized, and display as the visual information I2 an optimal walking route to implement efficient passing. Furthermore, the output control unit 240 causes the autonomous operation body 10 to display as the visual information I3 and I4 the behavior plan information related to the avoidance behavior of the autonomous operation body, and output voice utterance SO4 such as "I avoid in this way".

As described above, according to the output control unit 240 according to the present embodiment, by simultaneously indicating the avoidance routes of both the pedestrian P and the autonomous operation body 10, it is possible to more effectively solve the opposing state. Furthermore, the output control unit 240 according to the present embodiment can cause the autonomous operation body 10 to output the avoidance route described above as visual information to guide the pedestrian P to more intuitively grasp his/her avoidance route and move on to the behavior.

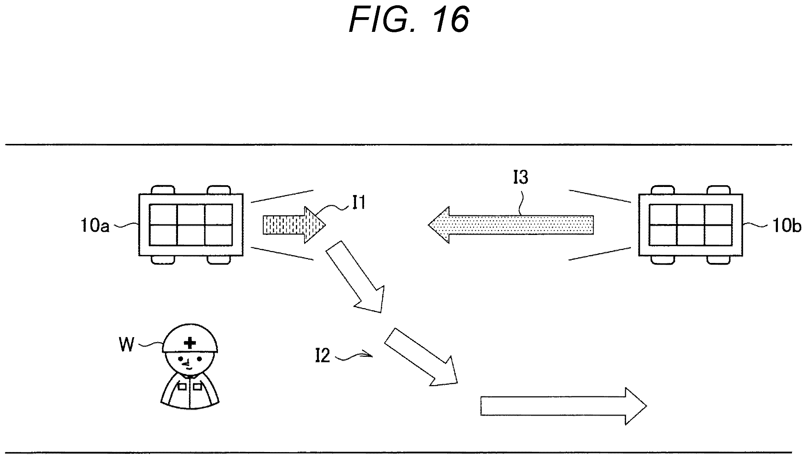

Furthermore, in Figs. 10 to 15, the case where the autonomous operation body 10 performs cooperative behavior with a person such as the pedestrian P has been described as an example. However, the cooperative behavior according to the present embodiment may be cooperative behavior between the autonomous operation body 10 and another operation body. Fig. 16 shows an example of a case where a plurality of autonomous operation bodies 10 performs cooperative behavior.

In the case of the example shown in Fig. 16, the output control unit 240 recognizes the visual information I3 related to movement of going straight displayed by the autonomous operation body 10b to cause the autonomous operation body 10a to display as the visual information I1 and I2 the behavior plan information indicating that the autonomous operation body 10a avoids the autonomous operation body 10b.

As described above, the information processing server 20 according to the present embodiment can plan the behavior of the autonomous operation body 10 to be controlled on the basis of the internal information and the behavior plan information presented by the other autonomous operation body 10, and cause the autonomous operation body 10 to be controlled to present the information related to the behavior.

In a case where the cooperative behavior is performed between the autonomous operation bodies 10, originally, the respective autonomous operation bodies 10 can be notified of each other's state or behavior plan by wireless communication or the like without the information presentation described above to implement cooperative behavior. However, since the observer W observing the autonomous operation body 10 cannot perceive that the communication as described above is being performed, in a case where the information presentation related to the internal information or the behavior plan information is not performed, it is necessary for the observer W to observe a plurality of autonomous operation bodies 10 in consideration of the possibility of the autonomous operation bodies 10 colliding with each other.

On the other hand, according to the information processing method according to the present embodiment, the internal information and the behavior plan information related to the plurality of autonomous operation bodies 10 performing the cooperative behavior are presented to surrounding people such as the observer W, so that it is possible to prevent the observer W or the like from unnecessarily fearing a collision. Furthermore, on the other hand, in a case where the information presentation related to the avoidance behavior is not performed, the observer W can accurately and promptly make a determination such as performing an emergency stop of the autonomous operation body 10, and work efficiency of the observer W and safety of the autonomous operation body 10 can be ensured.

Note that, in a case where a plurality of autonomous operation bodies 10 performs cooperative behavior, the priority related to the operation of each autonomous operation body 10 may be determined according to, for example, the importance or urgency of the task. For this reason, the output control unit 240 according to the present embodiment can cause presentation of information related to the task of the autonomous operation body 10 by visual information or the like. As described above, the internal information according to the present embodiment may include information regarding the task performed by the autonomous operation body 10. According to such control, it is possible to implement control such as another autonomous operation body 10 making way for the autonomous operation body 10 which is in a hurry, and the overall task efficiency can be effectively increased.

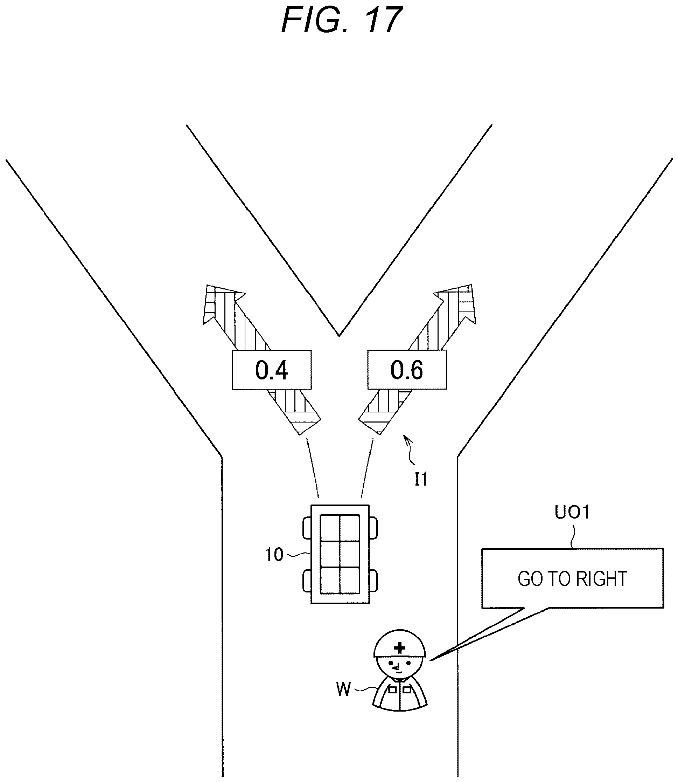

Furthermore, the internal information according to the present embodiment may include information regarding the reliability of the behavior plan of the autonomous operation body 10. Fig. 17 shows an example of a case where the autonomous operation body 10 presents the information related to the reliability described above to the observer W.

In the case of the example shown in Fig. 17, the output control unit 240 causes the autonomous operation body 10 to display as the visual information I1 the internal information related to the reliability on the basis of the low reliability related to the course selection by the behavior planning unit 230. Specifically, the output control unit 240 causes the autonomous operation body 10 to present internal information indicating that the reliability related to the determination of moving to the right and the reliability related to the determination of moving to the left are in conflict.

According to the control described above, it is possible to indicate to the observer W that the reliability related to the behavior of the autonomous operation body 10 is low, and ask for the instruction for the behavior to be performed by the autonomous operation body 10, so that more efficient task execution can be performed. Note that, at this time, the information processing server 20 may perform behavior planning on the basis of utterance UO1 of the observer W or the like, and determine a course to proceed. Furthermore, for example, the output control unit 240 may cause the autonomous operation body 10 to output the sound utterance such as "please give an instruction" so as to more explicitly ask the observer W for the instruction.

The information presentation in the cooperative behavior according to the present embodiment has been described above with reference to specific examples. According to the control of the information presentation by the output control unit 240 described above, a person in the surroundings of the autonomous operation body 10 can clearly grasp the internal state and the behavior plan of the autonomous operation body 10 and the intention of the behavior plan, and perform an appropriate response according to the behavior of the autonomous operation body 10.

Note that, in the above description, a case has been described above as a main example where the autonomous operation body 10 according to the present embodiment is a transport robot that performs a task at an airport, a station, a hospital, or the like, and the output control unit 240 controls the information presentation related to the movement route of the autonomous operation body 10. On the other hand, the control of the autonomous operation body 10 and information presentation according to the present embodiment is not limited to the example. The autonomous operation body 10 according to the present embodiment may be, for example, a work robot that performs cooperative behavior with a worker or another autonomous operation body in a factory, a distribution warehouse, or the like. Furthermore, the output control unit 240 according to the present embodiment may cause the autonomous operation body 10 to present behavior plan information indicating a time-series behavior order related to the cooperative behavior described above.

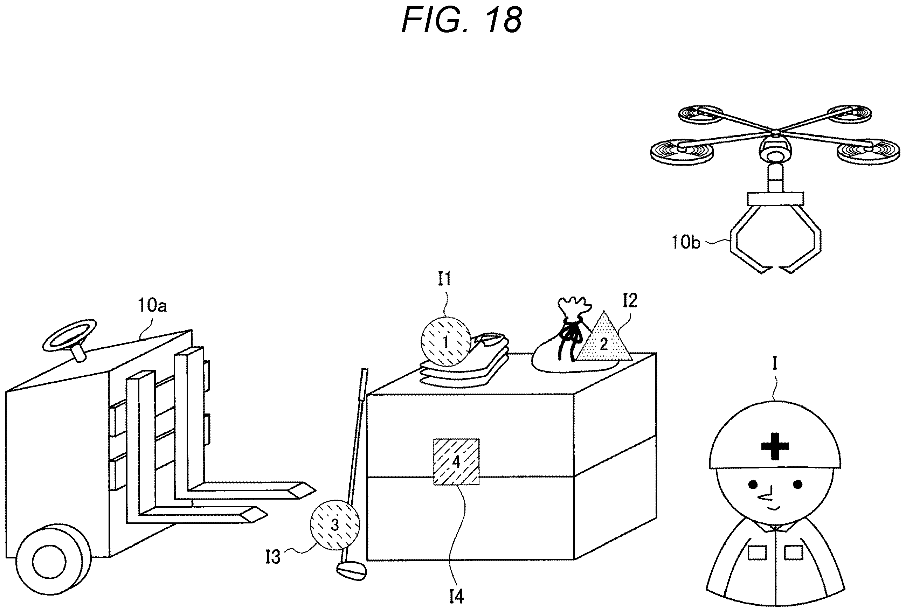

Fig. 18 is a diagram for describing information presentation indicating a time-series behavior order related to cooperative behavior according to the present embodiment. Fig. 18 shows the autonomous operation bodies 10a and 10b that perform cooperative behavior with a worker L in a factory or a distribution warehouse. Here, the cooperative behavior described above may be, for example, a task of transporting and storing a plurality of mixed products to storage locations respectively defined.

Furthermore, in the case of the example shown in Fig. 18, the autonomous operation body 10a is a work robot mainly in charge of transport and storage of heavy products, and the autonomous operation body 10b is a work robot that has the role of storing product in a high place where transportation by the worker L is difficult. Furthermore, the worker L is in charge of transporting and storing products that are difficult to grip and transport by the autonomous operation bodies 10a and 10b. Examples of the products include clothes and cloths that easily change shape, fragile product and expensive product, and product such as golf clubs that have a small gripping area.

Note that the autonomous operation body 10a may be, for example, a work robot of forklift type or the like that autonomously moves in a factory or a distribution warehouse, or may be a fixedly installed robot arm or the like. Furthermore, the autonomous operation body 10b may be, for example, a drone.

As described above, in a factory, a distribution warehouse, or the like, a case is also assumed where a task is executed by a plurality of workers L and the autonomous operation body 10 in cooperative behavior. At this time, the output control unit 240 according to the present embodiment can cause the autonomous operation body 10 to present the behavior plan information indicating the time-series behavior order between the autonomous operation body 10 and another moving body to effectively increase the efficiency of the task described above. Here, the moving body described above includes a worker who performs cooperative behavior with the autonomous operation body 10 and another autonomous operation body.

For example, in the case of the example shown in Fig. 18, the output control unit 240 causes the autonomous operation body 10a to display as the visual information I1 to I4 the behavior order of the autonomous operation body 10a, the autonomous operation body 10b, and the worker L determined to be optimal for the task execution. As described above, the output control unit 240 may cause information presentation related to increasing task efficiency to be presented to a worker or the like performing cooperative behavior.

Here, the shapes, colors, and patterns of the visual information I1 to I4 indicating the behavior order may be set for each task execution subject in charge of the corresponding product. In the example shown in Fig. 18, the output control unit 240 causes the visual information I1 and I3 corresponding to the clothes and the golf club that the worker L is in charge of to be displayed by circular symbols, causes the visual information I2 corresponding to the product that the autonomous operation body 10b is in charge of to be displayed by a triangular symbol, and causes the visual information I4 corresponding to the product that the autonomous operation body 10a is in charge of to be displayed by a square symbol.

Furthermore, the numbers included in the visual information I1 to I4 are information for indicating the behavior order related to the task execution. That is, the visual information I1 to I4 indicates that the worker L should first transport clothes, then the autonomous operation body 10b should transport a bag-shaped product, then the worker L should transport a golf club, and then the autonomous operation body 10a should transport a box-shaped product.

As described above, according to the output control unit 240 according to the present embodiment, in addition to the behavior of the autonomous operation body 10 to be controlled, the order of behavior of the worker L and the other autonomous operation body 10b performing the cooperative behavior is presented in time series, so that it is possible to greatly improve efficiency of the cooperative behavior, and eliminate the risk of injuries or damages when task execution entities try to work simultaneously.

As described above, the output control unit 240 according to the present embodiment is not limited to the movement route of the autonomous operation body 10, and presentation of various types of behavior plan information indicating the flow of behavior of the autonomous operation body 10 and the worker in time series can be controlled. For example, in addition to the examples described above, the output control unit 240 can output a three-dimensional operation trajectory related to arm operation of a manipulator as behavior plan information. According to the function described above of the output control unit 240 according to the present embodiment, it is possible to complete the task performed by the autonomous operation body 10 more safely and efficiently, and improve the work efficiency by eliminating the anxiety of the surrounding people.

### « 1.6. Flow of control »

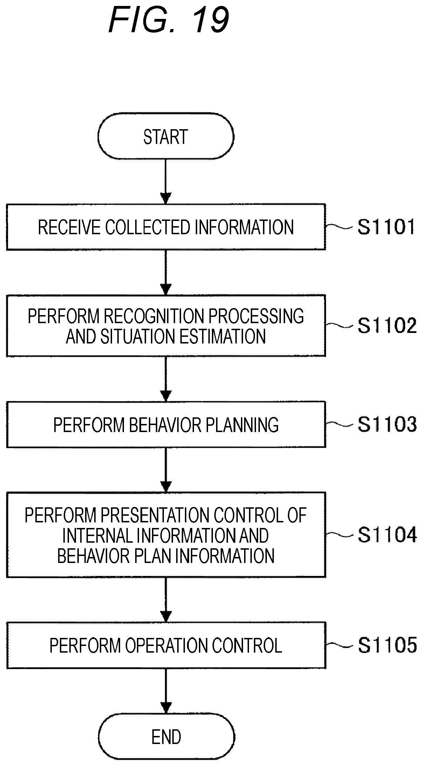

Next, the flow of control by the information processing server 20 according to the present embodiment will be described. Fig. 19 is a flowchart showing a flow of control by the information processing server 20 according to the present embodiment.

Referring to Fig. 19, first, the communication unit 250 of the information processing server 20 receives information collected by the autonomous operation body 10 (S1101). The information described above includes sensor information, images, sound information, or the like.

Next, the recognition unit 210 performs various recognition processes on the basis of the collected information received in step S1101, and estimates a situation (S1102).

Next, the behavior planning unit 230 performs behavior planning based on the situation estimated in step S1102 (S1103).

Next, the output control unit 240 performs presentation control of the internal information and the behavior plan information on the basis of the behavior plan determined in step S1103 (S1104), and causes the autonomous operation body 10 to perform an operation according to the behavior plan (S1105).

### <2. Hardware configuration example>

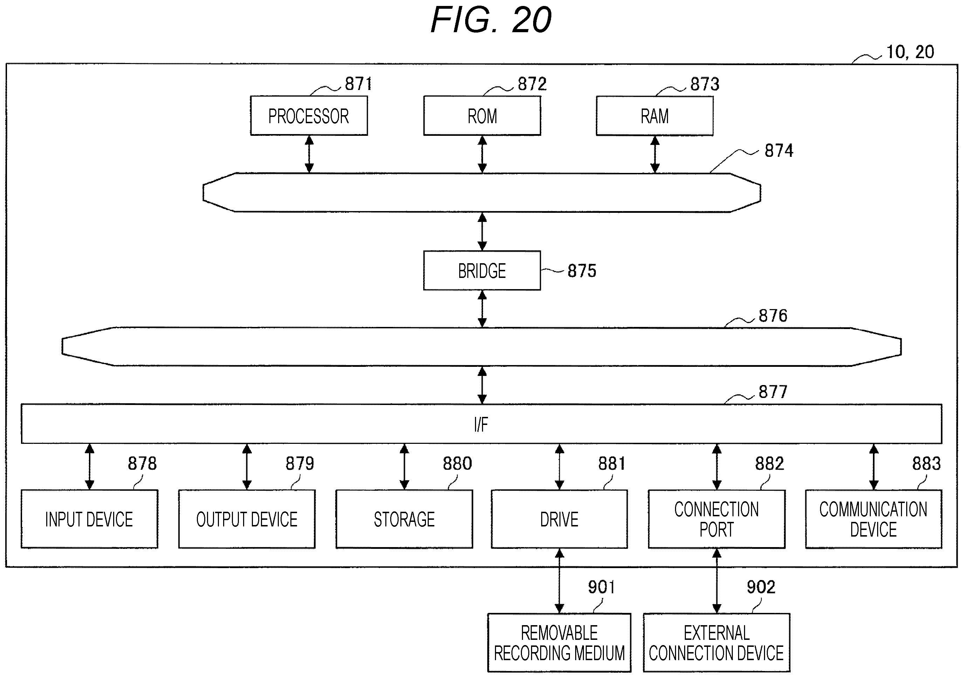

Next, a hardware configuration example common to the autonomous operation body 10 and the information processing server 20 according to an embodiment of the present disclosure will be described. Fig. 20 is a block diagram showing a hardware configuration example of the autonomous operation body 10 and the information processing server 20 according to an embodiment of the present disclosure. Referring to Fig. 20, the autonomous operation body 10 and the information processing server 20 include, for example, a processor 871, a ROM 872, a RAM 873, a host bus 874, a bridge 875, an external bus 876, an interface 877, and an input device 878, an output device 879, a storage 880, a drive 881, a connection port 882, and a communication device 883. Note that the hardware configuration indicated here is an example, and some of the components may be omitted. Furthermore, components other than the components indicated here may be further included.

### (Processor 871)

For example, the processor 871 functions as a calculation processing device or a control device, and controls the entire operation of each component or a part thereof on the basis of various programs recorded in the ROM 872, the RAM 873, the storage 880, or a removable recording medium 901.

### (ROM 872, RAM 873)

The ROM 872 is means that stores programs read by the processor 871, data used for calculations, and the like. The RAM 873 temporarily or permanently stores, for example, a program read by the processor 871 and various parameters that appropriately change when the program is executed.

### (Host bus 874, bridge 875, external bus 876, interface 877)

The processor 871, the ROM 872, and the RAM 873 are mutually connected via, for example, the host bus 874 capable of high-speed data transmission. On the other hand, the host bus 874 is connected to, for example, the external bus 876 of which data transmission speed is relatively low via the bridge 875. Furthermore, the external bus 876 is connected to various components via the interface 877.

### (Input device 878)

As the input device 878, for example, a mouse, a keyboard, a touch panel, a button, a switch, a lever, or the like is employed. Moreover, as the input device 878, a remote controller (hereinafter, remote) capable of transmitting a control signal using infrared rays or other radio waves may be employed. Furthermore, the input device 878 includes a voice input device such as a microphone.

### (Output device 879)

For example, the output device 879 is a display device such as a cathode ray tube (CRT), LCD, or organic EL, an audio output device such as a speaker or a headphone, a printer, a mobile phone, or a facsimile, and is a device that can notify a user of acquired information visually or audibly. Furthermore, the output device 879 according to the present disclosure includes various vibration devices capable of outputting a tactile stimulus.

### (Storage 880)

The storage 880 is a device for storing various types of data. As the storage 880, for example, a magnetic storage device such as a hard disk drive (HDD), a semiconductor storage device, an optical storage device, or a magneto-optical storage device is employed.

### (Drive 881)

For example, the drive 881 is a device that reads information recorded on the removable recording medium 901 such as a magnetic disk, an optical disk, a magneto-optical disk, or a semiconductor memory, or writes information on the removable recording medium 901.

### (Removable recording medium 901)

For example, the removable recording medium 901 is a DVD medium, a Blu-ray (registered trademark) medium, an HD DVD medium, various semiconductor storage media, or the like. Of course, the removable recording medium 901 may be, for example, an IC card on which a noncontact type IC chip is mounted, an electronic device, or the like.

### (Connection port 882)

For example, the connection port 882 is a universal serial bus (USB) port, an IEEE1394 port, a small computer system interface (SCSI), an RS-232C port, or a port for connecting an external connection device 902 such as an optical audio terminal.

### (External connection device 902)

For example, the external connection device 902 is a printer, a portable music player, a digital camera, a digital video camera, an IC recorder, or the like.

### (Communication device 883)

The communication device 883 is a communication device for connecting to a network, and is, for example, a communication card for a wired or wireless LAN, a Bluetooth (registered trademark), or a wireless USB (WUSB), a router for optical communication, a router for an asymmetric digital subscriber line (ADSL), a modem for various types of communication, or the like.

### <3. Conclusion>

As described above, the information processing server 20 that implements the information processing method according to an embodiment of the present disclosure includes the output control unit 240 that controls the presentation of internal information that affects the behavior of the autonomous operation body 10. Furthermore, the output control unit 240 according to an embodiment of the present disclosure is characterized by controlling dynamic presentation of the internal information and the behavior plan information related to the behavior plan of the autonomous operation body 10 based on the internal information. Furthermore, the behavior plan information described above includes information indicating a flow of behavior of the autonomous operation body 10 in time series. According to such a configuration, it is possible to make the surroundings recognize the internal state and the behavior plan of the autonomous operation body.

While preferred embodiments of the present disclosure have been described above in detail with reference to the accompanying drawings, the technical scope of the present disclosure is not limited to such examples. It is obvious that various variations and modifications can be conceived within the scope of the technical idea described in the claims by a person having ordinary knowledge in the field of technology to which the present disclosure belongs, and, of course, it is understood that these variations and modifications belong to the technical scope of present disclosure.

For example, in the embodiment described above, the case where the autonomous operation body 10 is a robot that performs an autonomous operation in a real space has been described as a main example. However, the autonomous operation body 10 according to an embodiment of the present disclosure may be, for example, an operation body that performs an autonomous operation in a virtual space. In this case, for example, the output control unit 240 can present the user with the internal state and the behavior plan of the autonomous operation body 10 that performs cooperative behavior with a user in a game space, and the intention of the behavior plan.

Furthermore, the effects described in the present specification are merely illustrative or exemplary, and are not limitative. That is, the technique according to the present disclosure can exhibit other effects obvious to those skilled in the art from the description of the present specification together with the effects described above or instead of the effects described above.

Furthermore, a program for causing hardware such as a CPU, a ROM, or a RAM built in a computer to exhibit the function equivalent to the configuration of the information processing server 20 can be created, and a recording medium with the program recorded capable of being read by a computer can also be provided.

Furthermore, the steps related to the processing of the information processing server 20 in the present specification do not necessarily have to be processed in time series in the order described in the flowchart. For example, the steps related to the processing of the information processing server 20 may be processed in an order different from the order described in the flowchart or may be processed in parallel.

Note that the following configuration is also within the technical scope of the present disclosure.
(1) An information processing apparatus including:
   an output control unit that controls presentation of internal information that affects behavior of an autonomous operation body, in which
   the output control unit controls dynamic presentation of the internal information and behavior plan information related to a behavior plan of the autonomous operation body based on the internal information, and
   the behavior plan information includes information indicating a flow of behavior of the autonomous operation body in time series.
(2) The information processing apparatus according to above (1), in which
   the output control unit causes dynamic presentation of the flow of the behavior of the autonomous operation body that changes on the basis of the internal information.
(3) The information processing apparatus according to above (1) or (2), in which
   the internal information includes an intention of planned behavior.
(4) The information processing apparatus according to any one of above (1) to (3), in which
   the behavior plan information includes information indicating a flow of behavior in cooperative behavior between the autonomous operation body and another moving body.
(5) The information processing apparatus according to any one of above (1) to (4), in which
   the internal information includes recognition information related to a surrounding environment.
(6) The information processing apparatus according to above (5), in which
   the recognition information includes detection information of a moving body in the surroundings of the autonomous operation body.
(7) The information processing apparatus according to above (6), in which
   the recognition information includes information related to behavior prediction of the moving body.
(8) The information processing apparatus according to above (6) or (7), in which
   the moving body is a pedestrian in the surroundings of the autonomous operation body, and
   the output control unit causes dynamic presentation of a predicted walking route of the pedestrian.
(9) The information processing apparatus according to any one of above (5) to (8), in which
   the recognition information includes information related to surrounding terrain of the autonomous operation body.
(10) The information processing apparatus according to above (9), in which
   the information related to the surrounding terrain includes detection information of terrain that causes a decrease in safety of the autonomous operation body or a surrounding object.
(11) The information processing apparatus according to above (9) or (10), in which
   the information related to the surrounding terrain includes information related to a blind spot.
(12) The information processing apparatus according to any one of above (1) to (11), in which
   the internal information includes information related to self-position estimation of the autonomous operation body.
(13) The information processing apparatus according to any one of above (1) to (12), in which
   the internal information includes a degree of reliability related to the behavior of the autonomous operation body.
(14) The information processing apparatus according to any one of above (1) to (13), in which
   the autonomous operation body is a device that performs autonomous movement, and
   the behavior plan information includes information related to transition of position information of the autonomous operation body in time series.
(15) The information processing apparatus according to above (14), in which
   the behavior plan information includes at least any one of pieces of information related to movement start, stop, or moving speed of the autonomous operation body.
(16) The information processing apparatus according to any one of above (1) to (15), in which
   the output control unit causes presentation, to a pedestrian walking in the surroundings of the autonomous operation body, of the predicted walking route of the pedestrian and a movement route of the autonomous operation body that has been changed on the basis of the walking route.
(17) The information processing apparatus according to any one of above (1) to (16), in which
   the behavior plan information includes information indicating a behavior order of the autonomous operation body and another moving body in time series.
(18) The information processing apparatus according to any one of above (1) to (17), in which
   the internal information includes information related to a task executed by the autonomous operation body.
(19) The information processing apparatus according to any one of above (1) to (18), in which
   the output control unit controls projection of the internal information and the behavior plan information, AR display, or VR display.
(20) An information processing method including:
   by a processor, controlling presentation of internal information that affects behavior of an autonomous operation body, in which
   the controlling presentation further includes controlling dynamic presentation of the internal information and behavior plan information related to a behavior plan of the autonomous operation body based on the internal information, and
   the behavior plan information includes information indicating a flow of behavior of the autonomous operation body in time series.

### REFERENCE SIGNS LIST

- 10: Autonomous operation body 10
- 110: Sensor unit
- 120: Imaging unit
- 130: Sound input unit
- 140: Display unit
- 150: Sound output unit
- 160: Driving unit
- 170: Control unit
- 180: Server communication unit
- 20: Information processing server
- 210: Recognition unit
- 220: Learning unit
- 230: Behavior planning unit
- 240: Output control unit
- 250: Communication unit

## Claims

1. An information processing apparatus comprising:
an output control unit that controls presentation of internal information that affects behavior of an autonomous operation body, wherein
the output control unit controls dynamic presentation of the internal information and behavior plan information related to a behavior plan of the autonomous operation body based on the internal information, and
the behavior plan information includes information indicating a flow of behavior of the autonomous operation body in time series.

2. The information processing apparatus according to claim 1, wherein
the output control unit causes dynamic presentation of the flow of the behavior of the autonomous operation body that changes on a basis of the internal information.

3. The information processing apparatus according to claim 1, wherein
the internal information includes an intention of planned behavior.

4. The information processing apparatus according to claim 1, wherein
the behavior plan information includes information indicating a flow of behavior in cooperative behavior between the autonomous operation body and another moving body.

5. The information processing apparatus according to claim 1, wherein
the internal information includes recognition information related to a surrounding environment.

6. The information processing apparatus according to claim 5, wherein
the recognition information includes detection information of a moving body in surroundings of the autonomous operation body.

7. The information processing apparatus according to claim 6, wherein
the recognition information includes information related to behavior prediction of the moving body.

8. The information processing apparatus according to claim 6, wherein
the moving body is a pedestrian in the surroundings of the autonomous operation body, and
the output control unit causes dynamic presentation of a predicted walking route of the pedestrian.

9. The information processing apparatus according to claim 5, wherein
the recognition information includes information related to surrounding terrain of the autonomous operation body.

10. The information processing apparatus according to claim 9, wherein
the information related to the surrounding terrain includes detection information of terrain that causes a decrease in safety of the autonomous operation body or a surrounding object.

11. The information processing apparatus according to claim 9, wherein
the information related to the surrounding terrain includes information related to a blind spot.

12. The information processing apparatus according to claim 1, wherein
the internal information includes information related to self-position estimation of the autonomous operation body.

13. The information processing apparatus according to claim 1, wherein
the internal information includes a degree of reliability related to the behavior of the autonomous operation body.

14. The information processing apparatus according to claim 1, wherein
the autonomous operation body is a device that performs autonomous movement, and
the behavior plan information includes information related to transition of position information of the autonomous operation body in time series.

15. The information processing apparatus according to claim 14, wherein
the behavior plan information includes at least any one of pieces of information related to movement start, stop, or moving speed of the autonomous operation body.

16. The information processing apparatus according to claim 1, wherein
the output control unit causes presentation, to a pedestrian walking in surroundings of the autonomous operation body, of a predicted walking route of the pedestrian and a movement route of the autonomous operation body that has been changed on a basis of the walking route.

17. The information processing apparatus according to claim 1, wherein
the behavior plan information includes information indicating a behavior order of the autonomous operation body and another moving body in time series.

18. The information processing apparatus according to claim 1, wherein
the internal information includes information related to a task executed by the autonomous operation body.

19. The information processing apparatus according to claim 1, wherein
the output control unit controls projection of the internal information and the behavior plan information, AR display, or VR display.

20. An information processing method comprising:
by a processor, controlling presentation of internal information that affects behavior of an autonomous operation body, wherein
the controlling presentation further includes controlling dynamic presentation of the internal information and behavior plan information related to a behavior plan of the autonomous operation body based on the internal information, and
the behavior plan information includes information indicating a flow of behavior of the autonomous operation body in time series.
